# EUROPEAN PATENT SPECIFICATION

(11) **EP 0 730 820 B1**
(45) Date of publication and mention of the grant of the patent: **30.05.2001**
(21) Application number: 96200579.9
(22) Date of filing: 04.03.1996
(51) Int. Cl.: A01C 11/02, A01C 5/04

(54) **Planting machine**
Pflanzmaschine
Planteuse

(30) Priority: 07.03.1995 BE 9500198
(43) Date of publication of application: 11.09.1996
(73) Proprietor: Perdu, Geert, B-8840 Staden (BE)
(72) Inventor: Perdu, Geert, B-8840 Staden (BE)
(74) Representative: Leherte, Georges M.L.M., Dr.

(56) References cited:
- EP-A- 0 390 289
- GB-A- 852 113
- GB-A- 2 228 910

## Description

The present invention relates to a planting machine, comprising a movable chassis supporting an endless transporting means which is rotable over guide rollers and to which at least two arms carrying a respective plant holder are connected, such that each plant holder is movable along a closed path, in order in to be provided with a plant on a first path section and to release this plant on a second path section, each plant holder being rotatably connected to an arm at a radial distance from said transporting means.

This invention relates more specifically to a planting machine for planting plants which have been sown beforehand in soil blocks.

The following method is in fact being used ever more frequently for growing certain plants. The plant seeds are placed in compressed blocks of earth (soil blocks), whereupon the plants are cultivated under ideal conditions (for example in a greenhouse) until they have reached a certain height. These soil blocks with plants are then placed in the soil on the field, where the plant can grow further.

Planting requires the following successive actions: making an opening in the soil, placing the plant in the opening, and filling the opening with soil. In this process, a separate opening can be provided for each plant. Often, however, a continuous furrow is made (by a plough, for example), in which a series of plants can then be placed next to one another.

Known planting machines can be used to carry out the abovementioned actions.

A known planting machine is described in American Patent No. 3,815,524. This planting machine comprises two rotatable wheels with radially extending arms. A plant holder is rotatably fastened between in each case an arm of one wheel and an arm of the other wheel. During the movement of the chassis, the wheels are driven and each plant holder describes an essentially circular path, the plant holder always being held in a virtually vertical position by the arms to which it is fastened. The direction of rotation of the wheels is such that the plant holders are displaced on their bottom path section in the direction which is opposed to the direction of travel of the chassis. The plant holders are provided in order to form an opening in the soil in their lowest position, and in order to deposit in this opening a plant which is being held. Furthermore, the machine also comprises pressure wheels in order to close the opening in which a plant has been deposited, so that the plant remains upright. The wheels are driven at a constant speed during the movement of the chassis, so that the distance between the plants is always the same.

In order to make uninterrupted operation of the planting machine possible, each plant holder, each time after it has released a plant, must be provided with a new plant. This is done manually by a person who is sitting on a seat provided on the chassis, and has a stock of plants at his/her disposal. In the text which follows, this person will be referred to as the operator. The dimensions of the planting machine are such that the operator can reach virtually all the plant holders which are situated on its top path section in order to provide them with a plant.

The number of plant holders which can be provided on such a planting machine is limited due to the fact that there has to be sufficient space between the arms of adjacent plant holders. After all, the plant holders must be able to rotate unimpeded with respect to their arms, in order to maintain their vertical position.

The number of plant holders which is situated within reach of the operator at any one time is consequently also limited which is a considerable impairment to the work of the operator. After all, the operator picks up a sufficient supply of plants each time to fill all the plant holders which are situated within his reach in one uninterrupted arm movement.

The operator's work is made easier and quicker the more plant holders he can fill during the same uninterrupted arm movement. Indeed, because of the time saving he has more time to pick up a new supply of plants, so that he can follow the rhythm of the machine more easily.

If the number of plant holders which can be reached at the same time is small, a higher degree of attentiveness and experience is required of the operator.

By adapting this planting machine such that the plant holders are situated at a greater distance from the axes of rotation of the wheels, a larger number of plant holders could be provided at a sufficient distance from one another. The problem indicated above would, however, not be solved by this measure, since the enlargement of the turning circle of the plant holders would have the corollary effect that not all the plant holders situated on the top of the path section can be reached by the operator.

American Patent No. 3,103,186 describes a planting machine on which the plant holders are fastened directly to a closed chain which can be rotated over chain wheels. In this planting machine too, only a limited number of plant holders are within reach of the operator. After all, the distance between the successive plant holders must be sufficient for the plant holders to be able to rotate unimpeded with respect to the chain, in order to maintain their vertical position. Moreover, the extension of the top length of the chain likewise does not represent a solution, since a section of this length would as a result be unreachable for the operator.

GB-852,113 describes a planting machine having the features mentioned in the first paragraph of this description. The plant holders and the plants are arranged on the section of their path where they are provided with plants such that they are displaced in the longitudinal direction. Consequently, the arms have to be fastened at a sufficiently large distance from one another (larger than the length of the plant holders) on the transporting means, so that in this planting machine too, only a limited number of plant holders are within reach of the operator at any one time.

Another known planting apparatus, disclosed in EP-0 390 289, also has the features mentioned in the first paragraph of this description. In this apparatus, the grippers are moved in the growing direction of the plants when they are on a pick-up location. So, on this path section, the plant holders holding plants are moved in their longitudinal direction.

In an unload position, the grippers are moved by carriers extending from a straight section of the transporting means.

So, this planting machine has a planting pitch (the distance between successive plants planted on the field), which is substantially equal to the distance between successive carriers on the transport element. In this machine too, only a small number of plant holders is within reach of an operator at any one time, and the distance between successive carriers can not be reduced while keeping the same planting pitch. Said distance also must be large enough to enable movement in the longitudinal direction of the plant holders holding plants.

The object of this invention is to provide a planting machine having the features mentioned in the first paragraph of this description, and without the abovementioned disadvantages of the known planting machines.

This object is achieved in such a planting machine, in which on the second path section, each plant holder is moved by an arm extending from a curved section of the transporting means in a direction away from the centre of curvature, and that on the first path section, each plant holder holding a respective plant is moved in a direction different from its longitudinal direction.

In the planting machine of the invention, the planting pitch is larger than the distance between successive arms on the transporting means.

A plant holder moved by an arm on a curved section of the transporting means and extending away from the centre of curvature, moves at a larger speed than the plant holders moved by an arm on a straight section. This larger speed must be approximately equal to the speed of the planting machine, such that the plant holder speed with respect to the soil is approximately zero when the plant is released (to ensure that plants are planted in an upright position). This means that the speed of the transporting means and of the plant holders moved by an arm on a straight section must be smaller than the speed of the planting machine, and that consequently the planting pitch is increased when the same distance between arms is mantained. So, for the same planting pitch, the distance between successive arms on the transporting means can be reduced.

On the first path section, the plant holders are situated close to one another, so that a large number of plant holders can be situated within reach of the operator in this case. On the curved sections of the transporting means, the arms rotate with respect to one another, so that the plant holders are given sufficient space to be able to rotate unimpeded with respect to their arms.

According to a preferred embodiment, each plant holder is rotatably suspended from an arm, such that the axis of rotation is provided above the centre of gravity of the plant holder holding a plant.

The abovementioned problem is solved in a particularly expedient manner if each arm extends in a substantially radial direction with respect to the transporting means.

In a preferred embodiment of the planting machine, the transporting means comprises a straight section, and on the first path section, each plant holder is moved by an arm extending from said straight section of the transporting means.

Another embodiment is characterised in that on the first path section, each plant holder is moved by an arm extending in a substantially perpendicular direction with respect to the direction of movement.

Preferably, each plant holder comprises a casing with an open top side and an open bottom side which can be closed off by a flap, while the planting machine comprises means for opening the flap on the second path section and for closing it before the plant holder reaches the first path section.

The automatic opening and closing of the flap takes place with means which are simple to implement if the flap is carried by an arm which is hingeably fastened to a side wall of the casing, said arm being provided with a running wheel, while the machine comprises a fixed guide track for guiding said running wheel during the movement of the plant holder, such that the flap is opened automatically on the second path section, in order to allow a plant situated in the casing to drop, and is then closed again.

In a particularly preferred embodiment, the casing is provided with a running wheel, while the machine comprises a fixed guide track for guiding said running wheel during the movement of the plant holder, such that the casing, after the flap has opened, tilts to an inclined position in which its top side is directed in the direction of movement of the planting machine.

In another preferred embodiment of this planting machine, the continuous transporting means is a closed chain, consisting of a series of links rotatably fastened to one another, while the chassis further comprises a guiding device for the arms, each arm being fastened to a guide trolley having two guide means, which are remote from one another in the longitudinal direction of the transporting means and are guided by the guiding device as the transporting means rotates, while only one of the two guide means of each arm is connected to a link of the transporting means.

If both guide means are connected to the same link, it is in fact found that the changes in direction of this link (on its chain wheel) bring about an excessive acceleration or deceleration of the plant holder of the arm fastened to this link. Consequently, this plant holder swings around its axis of rotation to an excessive extent. If one single guide means is fastened, this problem occurs to a greatly reduced extent.

In another particular embodiment, each arm is a U-shaped piece with two legs directed away from the transporting means, while each plant holder is rotatably fastened to a shaft which connects these legs.

At the moment that the plants are provided in the plant holder (on a straight section of the transporting means), the distance between the adjacent plant holders is minimal, as a result of which a large number of plant holders can be reached at the same time by the operator. At the moment that the plants are to be released (in order to be planted), the distance between the adjacent plant holders must, however, generally be larger than the said minimal distance.

This problem is solved in an expedient manner, and without ancillary means, by releasing the plants when the plant holders are displaced through a curved section of the transporting means.

At that moment, the plant holders fastened to the radially extending arms are in fact situated further from one another than is the case on a straight section of the transporting means.

The features of a most preferred embodiment of the planting machine are given in claim 11.

This invention is explained further with reference to the detailed description which follows of a possible embodiment of the planting machine according to this invention. In this description, reference is made to the appended figures, in which:
Figure 1 is a partial side view of the planting machine provided with only one planting mechanism with fourteen plant containers;
Figure 2 is a perspective drawing of a section of a chain and of the guide profiles, a guide trolley with an arm, which can be connected to this chain, and a plant container which can be connected to this arm;
Figure 3 is a perspective drawing of a plant container with a closed flap and of a plant container with an open flap.

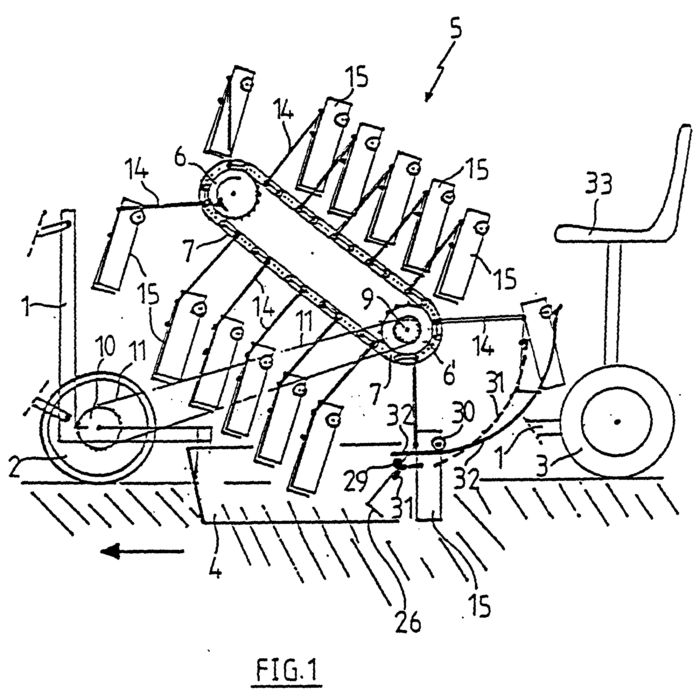

As can be seen in Figure 1, the planting machine consists essentially of a movable chassis (1), which is supported by wheels (2), (3). The chassis (1) is designed to be pulled, (for example by a tractor), but can also itself be provided with a motor which drives one or more wheels.

A U-shaped plough (4) is provided at the bottom of the chassis (1). This plough (4) is situated at a suitable height to form a furrow in the ground as the chassis (1) moves, over which the chassis (1) moves.

The rear wheels (3) of the chassis (1) are fastened to inclined axles, so that they run towards one another in the downward direction. These rear wheels (3), referred to as the pressure wheels, are provided in order to fill the furrow formed by the plough (4) again with the soil which has been loosened by the plough (4). The direction of travel of the chassis (1) is indicated in Figure 1 by an arrow.

Various planting mechanisms (5) are arranged next to one another on the chassis (1). In Figure 1, only one planting mechanism (5) is depicted.

Each planting mechanism (5) consists of a closed chain (7) which can be rotated over two chain wheels (6), (6') and consists of a series of links (8) which are fastened rotatably to one another by means of connecting pins (23). The chain wheels (6), (6') are remote from one another along the longitudinal axis of the chassis (1), while the chain wheel (6) situated closer to the front of the chassis (1) is arranged higher than the other chain wheel (6'). Furthermore, the chain wheels (6), (6') are also arranged such that the chain (7) extends in a vertical plane, parallel to the direction of travel.

A first drive chain wheel (9) is fastened on the axle of the chain wheel (6') situated closer to the rear of the chassis (1). A second drive chain wheel (10) is fastened to the axle of the front wheels (2) of the chassis (1). By means of a drive chain (11) which can be rotated over the first (9) and the second drive chain wheel (10), the rotational movement of the front wheels (2) is transmitted to the rear chain wheel (6') of the planting mechanism (5). This rear chain wheel (6') entrains the chain (7) of the planting mechanism (5), so that this chain (7) executes a revolving movement, the front chain wheel (6) obviously also rotating about its axle.

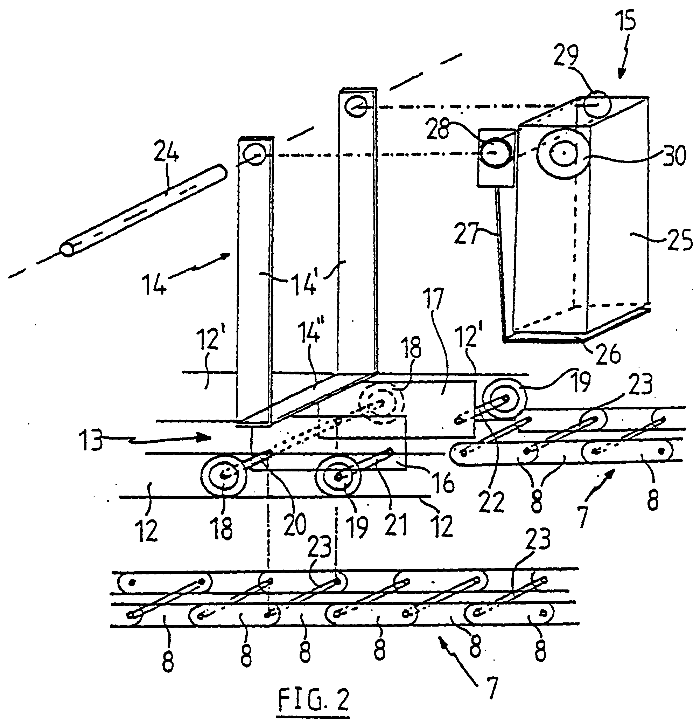

A U-shaped guide profile (12), (12') is arranged on both sides of the chain (7) over the entire length thereof (see Figure 2).

Furthermore, the planting mechanism (5) comprises fourteen guide trolleys (13), respectively provided with a U-shaped arm (14) which carries a plant container (15).

Each guide trolley (13) consists essentially of two parallel flank pieces (16), (17), to which four wheels (18), (19) are fastened.

Two wheels (18) are respectively fastened to the ends of an axle (20) which intersects both flank pieces (16), (17) and extends perpendicularly to these flank pieces (16), (17).

The two other wheels (19) are each fastened to a different axle (21), (22). These axles (21), (22) are fastened in line and perpendicular to the respective flank pieces (16), (17), and extend from these flank pieces (16), (17) on the sides directed away from one another.

The axle (20) which intersects both flank pieces (16), (17) extends through the hollow connecting pin (23) of a link (8) of the chain (7). The distance between the two flank pieces (16), (17) is larger than the width of the chain (7). When the chain (7) is driven, the guide trolley (13) is displaced along the closed path prescribed by the guide profiles (12), (12').

Each guide trolley (13) is provided with an arm (14). This arm (14) is a U-shaped piece with two parallel legs (14') and a base section (14") which connects the two legs (14'). The base section (14") is fastened to the flank pieces (16), (17) while the legs (14') extend virtually perpendicular to the guide profiles (12), (12').

A shaft (24) which connects the two legs (14') in the vicinity of their free ends is used as the suspension shaft for a plant container (15).

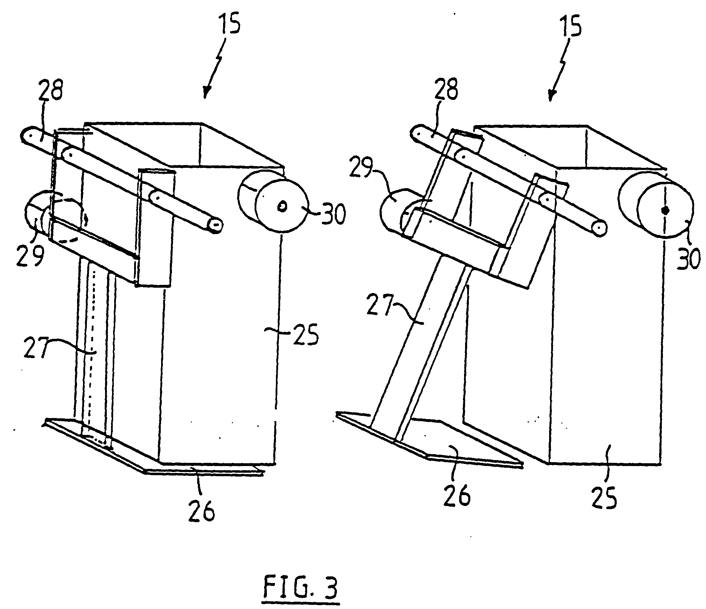

Each plant container (15) consists of a casing (25) with an open top side and an open bottom side (see Figure 3), and of a flap (26), by means of which the open bottom side can be closed off. This flap (26) is provided with an arm (27) which extends upwards along the outer wall of the casing (25) and is hingeably fastened to this outer wall in the vicinity of the top side of the casing (25) by means of a hollow shaft (28). A spring (not depicted in Figure 3) exerts a spring force directed towards the casing (25) on the arm (27), so that the flap (26) is pulled into its closed position. The arm (27) of the flap (26) is provided with a running wheel (29). A running wheel (30) is also provided on a side wall of the casing (25).

Guide tracks (31), (32) are fastened to the chassis (1) for the respective running wheels (29), (30) (see Figure 1). One guide track (31) is used to guide the running wheel (29) of the flap arm (27) so that the flap (26) of a passing plant holder (15) is opened at the moment when this plant holder (15) is situated in the furrow, and so that this flap (26) is gradually closed again (by means of the tensile force of the spring) as the plant holder (15) moves upwards again. The flap (26) is completely closed when the plant holder (15) comes within reach of the operator.

The other guide track (32) is used to guide the running wheel (30) of the casing (25), so that the casing (25) - starting from the moment when the flap (26) is opened - gradually assumes an ever more inclined position, in which the top side is directed towards the front of the planting machine.

After the flap (26) is opened, the forward speed of the casing (25) with respect to the ground becomes ever greater. If the casing (25) were to retain its vertical position, the top part of the plant would be pulled along by the casing (25), so that the plant would be planted at an angle. As a result of the casing assuming the inclined position mentioned, this is prevented.

A seat (33) is provided for the operator on the rear part of the chassis (1). The dimensions of the planting mechanism are such that the five plant holders (15) situated on the top straight section of the chain (7) can be reached by the operator. Due the fact that this top straight portion of the chain (7) runs obliquely upwards in the direction of the front of the planting machine, all the open top sides of the casings (25) on this chain section can be reached and seen particularly easily by the operator.

## Claims

1. Planting machine, comprising a movable chassis (1) supporting an endless transporting means (7) which is rotatable over guide rollers (6), (6'), and to which at least two arms (14) carrying a respective plant holder (15) are connected, such that each plant holder (15) is movable along a closed path in order to be provided with a plant on a first path section and to release this plant on a second path section, each plant holder (15) being rotatably connected to an arm (14) at a radial distance from said transporting means (7), **characterised in that** on the second path section, each plant holder (15) is moved by an arm (14) extending from a curved section of the transporting means (7) in a direction away from the centre of curvature, and that on the first path section, each plant holder (15) holding a respective plant is moved in a direction different from their longitudinal direction.

2. Planting machine according to claim 1, characterised in that each plant holder (15) is rotatably suspended from an arm (14), such that the axis of rotation is provided above the centre of gravity of the plant holder (14) holding a plant.

3. Planting machine according to claim 1 or 2, characterised in that each arm (14) extends in a substantially radial direction with respect to the transporting means (7).

4. Planting machine according to any of the preceding claims, characterised in that the transporting means (7) comprises a straight section, and that on the first path section, each plant holder (15) is moved by an arm (14) extending from said straight section of the transporting means (7).

5. Planting machine according to claim 4, characterised in that on the first path section, each plant holder (15) is moved by an arm (14) extending in a substantially perpendicular direction with respect to the direction of movement.

6. Planting machine according to any of the preceding claims, characterised in that each plant holder (15) comprises a casing (25) with an open top side and an open bottom side which can be closed off by a flap (26), and that the planting machine comprises means (29), (31) for opening the flap (26) on the second path section and for closing it before the plant holder (15) reaches the first path section.

7. Planting machine according to claim 6, characterised in that the flap (26) is carried by an arm (27) which is hingeably fastened to a side wall of the casing (25), said arm (27) being provided with a running wheel (29), in that the machine comprises a fixed guide track (31) for guiding said running wheel (29) during the movement of the plant holder (15) such that the flap (26) is opened automatically on the second path section, in order to allow a plant situated in the casing (25) to drop, and is then closed again.

8. Planting machine according to claim 6 or 7, characterised in that the casing (25) is provided with a running wheel (30), in that the machine comprises a fixed guide track (32) for guiding said running wheel (30) during the movement of the plant holder (15), such that the casing (25), after the flap (26) has opened, tilts to an inclined position in which its top side is directed in the direction of movement of the planting machine.

9. Planting machine according to any of the preceding claims, characterised in that the transporting means is a closed chain (7), consisting of a series of links (8) rotatably fastened to one another, in that the chassis (1) further comprises a guiding device for the arms (14), in that each arm (14) is fastened to a guide trolley (13) having two guide means (18), (19) which are remote from one another in the longitudinal direction of the transporting means (7) and are guided by the guiding device (12), (12') as the transporting means (7) rotates, and in that only one of the two guide means (18), (19) of each arm (14) is connected to a link (8) of the transporting means (7).

10. Planting machine according to any of the preceding claims, characterised in that each arm is a U-shaped (14) piece with two legs (14') directed away from the transporting means (7), and in that each plant holder (15) is rotatably fastened to a shaft (24) which connects these legs (14').

11. Planting machine according to any of the preceding claims, characterised in that the transporting means (7) comprises two straight sections located one above the other, which are connected to one another by two sections which are bent around the guide rollers (6), (6') in that on the first path section each plant holder (15) is moved by an arm (14) extending from the top straight section, and in that on the second path section, each plant holder (15) is moved in a direction which is opposed to the direction of movement of the chassis (1).

## Patentansprüche

1. Pflanzmaschine, bestehend aus einem beweglichen Rahmen (1), der ein endloses Transportmittel (7) trägt, das über Führungsrollen (6), (6') drehbar ist und an dem wenigstens zwei einen dementsprechenden Pflanzenhalter (15) tragende Arme (14) derart befestigt sind, dass jeder Pflanzenhalter (15) einem geschlossenen Weg entlang beweglich ist um so auf einem ersten Wegbereich mit einer Pflanze versehen werden zu können und diese Pflanze auf einem zweiten Wegbereich wieder freizugeben, wobei jeder Pflanzenhalter (15) in einer radialen Entfernung vom besagten Transportmittel (7) drehbar an einem Arm (14) befestigt ist, dadurch gekennzeichnet, dass im zweiten Wegbereich, jeder, sich von einem gekrümmten Bereich des Transportmittels (7) in eine der Krümmungssmitte entgegengesetzte Richtung erstreckende Pflanzenhalter (15) von einem Arm (14) bewegt wird, und dass im ersten Wegbereich jeder Pflanzenhalter (15), der eine dementsprechende Pflanze enthält in eine Richtung, die eine andere ist als seine Längsrichtung, bewegt wird.

2. Pflanzmaschine nach Anspruch 1, dadurch gekennzeichnet, dass jeder Pflanzenhalter (15) an einem Arm (14) derart drehbar aufgehängt ist, dass die Drehachse sich über dem Schwerpunkt des Pflanzenhalters (14), der eine Pflanze enthält, befindet.

3. Pflanzmaschine nach Anspruch 1 oder 2, dadurch gekennzeichnet, dass jeder Arm (14) sich in eine hauptsächlich radiale Richtung hin erstreckt in Bezug auf das Transportmittel (7).

4. Pflanzmaschine nach irgendeinem der vorhergehenden Ansprüche, dadurch gekennzeichnet, dass das Transportmittel (7) einen geraden Bereich umfasst und dass im ersten Wegbereich jeder Pflanzenhalter (15) von einem Arm (14) bewegt wird, der sich vom geraden Bereich des Transportmittels (7) aus erstreckt.

5. Pflanzmaschine nach Anspruch 4, dadurch gekennzeichnet, dass im ersten Wegbereich jeder Pflanzenhalter (15) von einem Arm (14) bewegt wird, der sich in eine hauptsächlich senkrechte Richtung erstreckt in Bezug auf die Bewegungsrichtung.

6. Pflanzmaschine nach irgendeinem der vorhergehenden Ansprüche, dadurch gekennzeichnet, dass jeder Pflanzenhalter (15) ein Gehäuse (25) umfasst mit einer offenen Oberseite und einer offenen Unterseite, die mittels einer Klappe (26) abgeschlossen werden kann und dass die Pflanzmaschine Mittel (29), (30) umfasst zum Öffnen der Klappe im zweiten Wegbereich und zum Schließen bevor der Pflanzenhalter (15) den ersten Wegbereich erreicht.

7. Pflanzmaschine nach Anspruch 6, dadurch gekennzeichnet, dass die Klappe (26) von einem Arm (27) getragen wird, der gelenkig an einer Seitenwand des Gehäuses (25) befestigt ist, wobei besagter Arm (27) mit einem Laufrad (29) versehen ist, dadurch dass die Maschine eine feste Führungsschiene (31) umfasst um besagtes Laufrad (29) während der Bewegung des Pflanzenhalters (15) zu führen, so dass die Klappe (26) automatisch geöffnet wird im zweiten Wegbereich um es zu ermöglichen eine im Gehäuse (25) befindliche Pflanze fallen zu lassen und anschließend wieder geschlossen wird.

8. Pflanzmaschine nach Anspruch 6 oder 7, dadurch gekennzeichnet, dass das Gehäuse (25) mit einem Laufrad (30) versehen ist, dass die Maschine eine feste Führungsschiene (32) umfasst um besagtes Laufrad (30) während der Bewegung des Pflanzenhalters (15) derart zu führen, dass das Gehäuse (25), nachdem die Klappe (26) sich geöffnet hat, in eine schräge Lage kippt in der seine Oberseite in die Bewegungsrichtung der Pflanzmaschine gerichtet ist.

9. Pflanzmaschine nach irgendeinem der vorhergehenden Ansprüche, dadurch gekennzeichnet, dass das Transportmittel eine geschlossene Kette (7) ist, bestehend aus einer Reihe von drehbar an einander befestigten Gliedern, dass der Rahmen (1) weiter eine Führungsvorrichtung für die Arme (14) umfasst, dass jeder Arm (14) an einem Führungsrollenbock (13) befestigt ist, die zwei Führungsmittel (18), (19) hat, die in die Längsrichtung des Transportmittels (7) von einander entfernt sind und von der Führungsvorrichtung (12), (12') geführt werden wenn das Transportmittel (7) sich dreht und dadurch dass nur eines der beiden Führungsmittel (18), (19) jedes Armes (14) mit einem Glied (8) des Transportmittels (7) verbunden ist.

10. Pflanzmaschine nach irgendeinem der vorhergehenden Ansprüche, dadurch gekennzeichnet, dass jeder Arm ein U-förmiges Teil (14) ist mit zwei vom Transportmittel (7) hinweg gerichteten Beinen (14') und dadurch dass jeder Pflanzenhalter (15) drehbar an einer Welle (24) befestigt ist, die diese Beine (14') verbindet.

11. Pflanzmaschine nach irgendeinem der vorhergehenden Ansprüche, dadurch gekennzeichnet, dass das Transportmittel (7) zwei gerade Bereiche umfasst, die sich über einander befinden, die mittels zwei Teilen, die um die Führungsrollen (6), (6') gebogen sind, mit einander verbunden sind, dass im ersten Wegbereich jeder Pflanzenhalter (15) von einem Arm (14) bewegt wird, der sich von dem oberen geraden Bereich aus erstreckt und dadurch dass im zweiten Wegbereich jeder Pflanzenhalter (15) in eine Richtung bewegt wird, die der Bewegungsrichtung des Rahmens (1) entgegengesetzt ist.

## Revendications

1. Planteuse, comportant un châssis mobile (1) supportant un moyen de transport sans fin (7), qui tourne sur des roues guides (6), (6') et sur lequel au moins deux bras (14) portant respectivement, un support de plant (15) sont connectés, de sorte que chaque support de plant (15) est mobile le long d'un trajet fermé afin d'être muni d'un plant sur une première partie du trajet et de libérer le plant sur une deuxième partie du trajet, chaque support de plant (15) étant connecté de manière à pouvoir entrer en rotation, à un bras (14) à une distance radiale du moyen de transport (7), caractérisée en ce que sur la deuxième partie du trajet, chaque support de plant (15) est déplacé par un bras (14) se prolongeant depuis une partie courbée du moyen de transport (7) en une direction s'éloignant du centre de courbure, et en ce que sur la première partie du trajet, chaque support de plant (15) portant respectivement, un plant est déplacé dans une direction différente de leur direction longitudinale.

2. Planteuse suivant la revendication 1, caractérisée en ce que chaque support de plant (15) est suspendu de manière à pourvoir tourner, sur un bras (14), de sorte que l'axe de rotation se situe au-dessus de centre de gravité du support de plant (15) supportant un plant.

3. Planteuse suivant la revendication 1 ou 2, caractérisée en ce que chaque bras (14) se prolonge dans une direction sensiblement radiale par rapport au moyen de transport (7).

4. Planteuse suivant l'une quelconque des revendications précédentes, caractérisée en ce que le moyen de transport (7) se compose d'une partie droite et en ce que sur la première partie du trajet, chaque support de plant (15) est déplacé par un bras (14) se prolongeant depuis cette partie droite du moyen de transport (7).

5. Planteuse suivant la revendication 4, caractérisée en ce que sur la première partie du trajet, chaque support de plant (15) est déplacé par un bras (14) se prolongeant dans une direction sensiblement perpendiculaire par rapport à la direction du mouvement.

6. Planteuse suivant l'une quelconque des revendications précédentes, caractérisée en ce que chaque support de plant (15) comprend un boîtier (25) avec une face supérieure ouverte et une face inférieure ouverte qui peut être fermée par un volet (26), et en ce que la planteuse comprend des moyens (29), (31) pour ouvrir le volet (26) sur la deuxième partie du trajet et pour le fermer avant que le support de plant (15) n'atteigne la première partie du trajet.

7. Planteuse suivant la revendication 6, caractérisée en ce que le volet (26) est porté par un bras (27) qui est fixé par charnière à une paroi latérale du boitier (25), le bras (27) étant muni d'une roue d'avancement (29), en ce que la machine comprend un rail guide fixe (31) pour guider la roue d'avancement (29) pendant le mouvement du support de plant (15) de sorte que le volet (26) soit automatiquement ouvert sur la deuxième partie du trajet, afin de permettre à un plant situé dans le boîtier (25) de tomber, et il est à nouveau fermé.

8. Planteuse suivant la revendication 6 ou 7, caractérisée en ce que le boîtier (25) est muni d'une roue d'avancement (30), en ce que la machine comprend un rail guide fixe (32) pour guider la roue d'avancement (30) pendant le mouvement du support de plant (15), de sorte que le boîtier (25), lorsque le volet (26) est ouvert, penche dans une position inclinée dans laquelle sa face supérieure est dirigée dans la direction du mouvement de la planteuse.

9. Planteuse suivant l'une quelconque des revendications précédentes, caractérisée en ce que le moyen de transport est une chaine fermée (7), consistant en une série de maillons (8) fixés de manière à pouvoir entrer en rotation les uns par rapport aux autres, en ce que le châssis (1) comprend en outre, un dispositif de guide des bras (14), en ce que chaque bras (14) est fixé à un chariot guide (13) ayant deux moyens de guide (18), (19) qui sont éloignés les uns des autres dans la direction longitudinale du moyen de transport (7) et sont guidés par le dispositif de guidage (12), (12') lorsque le moyen de transport (7) tourne et en ce que seul l'un des deux dispositifs de guide (18), (19) de chaque bras (14) est connecté à un maillon (8) du moyen de transport (7).

10. Planteuse suivant l'une quelconque des revendications précédentes, caractérisée en ce que chaque bras est une pièce en U (14) avec deux jambes (14') dirigées à l'opposé du moyen de transport (7), et en ce que chaque support de plant (15) est fixé de manière à pouvoir tourner, à un arbre (24) qui connecte ces jambes (14').

11. Planteuse suivant l'une quelconque des revendications précédentes, caractérisée en ce que le moyen de transport (7) comprend deux parties droites placées l'une au-dessus de l'autre, qui sont connectées l'une à l'autre par des parties qui sont fléchies autour des roues guides (6), (6'), en ce que sur la première partie du trajet, chaque support de plant (15) est déplacé par un bras (14) se prolongeant depuis la partie droite et en ce que sur la deuxième partie du trajet, chaque support de plant (15) est déplacé dans une direction qui est opposée à la direction du mouvement du châssis (1).
